# EUROPEAN PATENT APPLICATION

(11) **EP 2 988 030 A2**
(43) Date of publication of application: **24.02.2016**
(21) Application number: 15172641.1
(22) Date of filing: 18.06.2015
(51) Int. Cl.: F16H 57/04

(54) **LUBRICATING DEVICE FOR TRANSMISSION**

(30) Priority: 22.08.2014 JP 2014169058
(71) Applicant: AISIN AI Co., Ltd., Nishio-shi Aichi 445-0006 (JP)
(72) Inventor: ICHIKAWA, Masaya, Nishio-shi,, Aichi 445-0006 (JP); OSAWA, Hideya, Nishio-shi,, Aichi 445-0006 (JP)
(74) Representative: TBK

(57) **Abstract**

A lubricating device for transmission includes a rotational shaft (112) provided in a transmission housing (101), bearings (121,122) attached to the transmission housing (101) for supporting the rotational shaft (112), a cylindrical rotational member (11) fixed to the rotational shaft (112) between the bearings (121,122) at an outer peripheral of said rotational shaft (112), at least one oil delivery groove (11b.11c) which is spirally formed on an outer peripheral surface of the cylindrical rotational member (11), the outer peripheral surface of the cylindrical rotational member (11) being covered by a rotational member housing portion (101a) of the transmission housing (101).

## Description

### CROSS REFERENCE TO RELATED APPLICATIONS

This application is based on and claims priority under 35 U.S.C. §119 to Japanese Patent Application 2014-169058, filed on August 22, 2014, the entire contents of which is incorporated herein reference.

### FIELD OF THE INVENTION

The present invention relates to a lubricating device for supplying oil to a member of a bearing or the like of a transmission.

### BACKGROUND

Conventionally, as disclosed in JP2003-42273 A, the lubricating device for transmission comprises a blade-shaped oil catcher (lubricating oil guiding member) fixed to an output shaft of transmission and a housing for covering the output shaft and the oil catcher. With the rotation of the output shaft, the oil catcher is rotated, and oil also rotates within the housing, and accordingly the oil flows into an oil hole formed in the output shaft. By this circulation of oil, oil is delivered to a member of a bearing or the like of the transmission.

However, because the lubricating device for transmission disclosed in JP2003-42273 A is provided on the output shaft, the output shaft becomes long by the dimension to mount the lubricating device thereto. Thus there is a problem that the axial dimension of the transmission is increased. Also, when the rotational speed of the output shaft becomes high, the rotational speed of the oil catcher becomes high, the oil that is rotated by the catcher is moved outward by centrifugal force, and it becomes difficult for the oil to flow in the oil hole. As a result, there is a problem that delivery amount of the oil by the lubricating device for transmission becomes small.

The present invention was made in consideration of the above-mentioned situation, and the object of the invention is to provide a lubricating device for transmission which can reduce the axial dimension of the transmission in size and can deliver the oil in a stable manner.

### SUMMARY OF THE INVENTION

The lubricating device for transmission according to a first aspect of the invention includes a rotational shaft provided in a transmission housing, bearings attached to the transmission housing for supporting the rotational shaft, a cylindrical rotational member fixed to the rotational shaft between the bearings at an outer peripheral of said rotational shaft, at least one oil delivery groove which is spirally formed on an outer peripheral surface of the cylindrical rotational member, the outer peripheral surface of the cylindrical rotational member being covered by a rotational member housing portion of the transmission housing.

Thus, as the cylindrical rotational member that delivers the oil is provided between the bearings for supporting the rotational shaft, when the lubricating device for transmission is provided to the transmission, the axial length of the transmission does not become long, and it is possible to decrease the size of the transmission in the axial direction. Also, as the lubricating device for transmission is a screw pump that delivers the oil by rotating the cylindrical rotational member formed with oil delivery groove on the outer peripheral surface thereof, regardless of the rotational speed of the rotational shaft to which the cylindrical rotational member is fixed, the oil can be delivered in a stable manner.

Also, the outer peripheral surface of the cylindrical rotational member is covered by the rotational member housing portion of the transmission housing that rotatably supports the rotational shaft. Thus, the transmission housing is formed with the space in which the cylindrical rotational member is accommodated, and is used as a casing of the lubricating device for transmission. Therefore, it is possible to reduce the number of parts constituting the lubricating device for transmission. Accordingly, it is possible to reduce the size, weight, and manufacturing cost of the automatic transmission.

### BRIEF DESCRIPTION OF THE DRAWINGS

The foregoing and additional features and characteristics of the present invention, will become more apparent from the following detailed description considered with the reference to the accompanying drawings, wherein:
FIG. 1 is a cross-sectional view of the lubricating device for transmission according to an embodiment of the invention;
FIG. 2 is a perspective view of the cylindrical rotational member.

### EMBODIMENT OF THE INVENTION

### (Structure of the transmission)

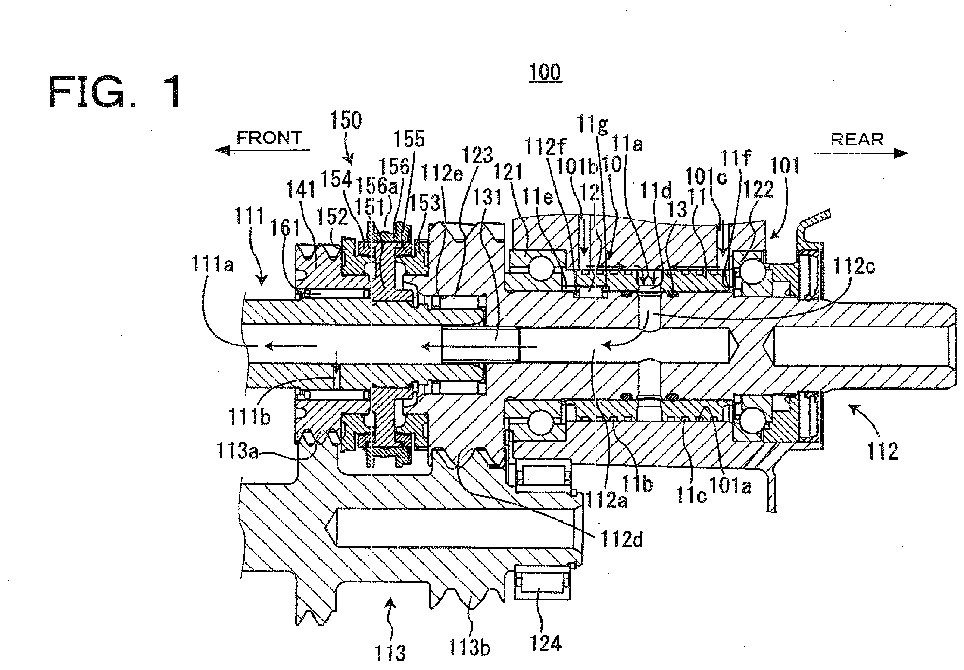

A structure of a transmission 100 to which a lubricating device 10 for transmission in accordance with an embodiment of the present invention is attached will be described below with reference to FIG.1. As shown in FIG.1, a transmission 100 includes a transmission housing 101, an input shaft 111, an output shaft 112, a counter shaft 113, a first bearing 121, a second bearing 122, a third bearing 123, a fourth bearing 124, a connecting member 131, a plurality of drive gears 141, a plurality of synchronizer mechanisms 150, a lubricating device 10 for transmission 100. In FIG. 1, the left side of the sheet is the front side of the transmission 100 and the respective components constituting the transmission 100, and the right side of the sheet is the rear side of the transmission 100 and the respective components constituting the transmission 100.

The output shaft 112 is rotatably supported by the first bearing 121 and the second bearing 122 attached to the housing 101, being rotatably supported to the housing 101. The first bearing 121 and the second bearing 122 are spaced from each other in the axial direction of the output shaft 112 (front and rear direction). In this embodiment, the first bearing 121 and the second bearing 122 are an angular contact bearing.

An output shaft oil passage 112a is formed in the axial portion of the output shaft 112 in an axial direction thereof, The output shaft oil passage 112a is formed from an intermediate portion of the output shaft 112 and opens outside at a front end of the output shaft 112. At the intermediate position in the axial direction of the output shaft 112, the communication passage 112c that communicates with the output shaft oil passage 112a and opens to the outer peripheral surface of the output shaft 112 is formed.

On the outer peripheral surface of the output shaft 112, a key groove 112f is formed. On the front end portion of the output shaft 112, an output-side reduction gear 112d is formed. In other words, the output-side reduction gear 112d is formed closer to the input shaft 111 than the bearings 121 and 122. In an axial portion of the front end of the output shaft 112, a bearing mounting recess 112e is formed by becoming recessed. The rear end of the output shaft 112 is connected to a differential gear (not shown) that absorb the differential of the drive wheels via a propeller shaft.

The input shaft 111 is provided in the front side of the output shaft 112 in coaxial relation to the output shaft 112. In this embodiment, a rear end portion of the input shaft 111 is rotatable supported by the third bearing 123 that is attached to the bearing mounting recess 112e. A front end portion of the input shaft 111 is rotatable supported by a bearing mounted on a clutch housing or an engine housing (not shown). By such structure, the input shaft 111 is rotatably supported to the housing 101. In the axial portion of the input shaft 111, an input shaft oil passage 111 a that opens outside at the rear end of the input shaft 111 is formed in the axial direction.

A connecting member 131 is in a cylindrical shape. The connecting member 131 is fitted to the front end portion of the output shaft oil passage 112a of the output shaft 112. The portion more frontward than the center of the connection member 131 is inserted into the input shaft oil passage 111 a. By such structure, the input shaft oil passage 111 a and the output shaft oil passage 112a are connected by the connecting member 131, and accordingly the leakage of oil from the portion between the output shaft oil passage 112a and the input shaft oil passage 111 a is prevented.

Plurality of drive gears 141 are rotatably mounted on the input shaft 111 by bearings 161, such as needle bearing, which is mounted on the outer peripheral surface of the input shaft 111. At the position where the drive gears 141 is mounted on the input shaft 111, an oil supply hole 111b that communicates with the input shaft oil passage 111a and opens to the outer peripheral surface of the input shaft 111 is formed. To the input shaft 111, the rotational driving force from a prime mover, for example, an engine or a motor is input.

A counter shaft 113 is provided in parallel with the input shaft 111 and the output shaft 112. The counter shaft 113 is rotatably supported by the fourth bearing 124 and a fifth bearing (not shown) mounted on the housing 101, and is mounted rotatably relative to the housing 101. On the counter shaft 113, plurality of driven gears 113a which mesh with the drive gears 141 respectively are formed. On the counter shaft 113, a reduction gear 113b which meshes with the output-side reduction gear 112d is formed. Thus, the transmission 100 of the present embodiment is an output reduction type in which the output-side reduction gear 112d that is engaged with the reduction gear 113b formed on the counter shaft 113 is formed on the output shaft 112, and a rotational driving force from a prime mover is decelerated between the counter shaft 113 and the output shaft 112.

A synchronizer mechanism 150 includes a clutch hub 151, engaging members 152,153, synchronizer rings 154, 155, and sleeve 156. The clutch hub 151 is fixed to the input shaft 111 with spline fitting at the position between the drive gears 141 which face to each other or at the position between the output-side reduction gear 112d and the drive gear 141. Engaging members 152 and 153 are fixed to the drive gear 141 and the output-side reduction gear 112d. Synchronizer rings 154,155 are interposed between the clutch hub 151 and the engagement members 152,153. The sleeve 156 is axially movably engaged with the outer circumference of the clutch hub 151 by spline.

The sleeve 156 is engaged with neither the engaging member 152 nor the engaging member 153 at the "neutral position" shown in FIG.1. On the outer periphery of the sleeve 156, an annular engaging groove 156a is formed by being recessed. In the engaging groove 156a, a fork (not shown) is engaged.

If the sleeve 156 is shifted to the side of engaging member 152 by the fork, the sleeve 156 is brought into spline engagement with the synchronizer ring 154 to make the rotation of the input shaft 111 synchronize with the rotation of the drive gear 141, and then engages with external spline of the outer circumference of the engaging member 152 so that the drive gear 141 is connected to the input shaft 111 to restrict relative rotaion therebetween to establish a shift speed. On the other hand, if the sleeve 156 is shifted to the side of the engaging member 153 by the fork, after the synchronizer ring 155, likewise, makes the rotations of the output shaft 112 and input shaft 111 synchronize with each other, the output shaft 112 is connected to the input shaft 111 without relative rotation therebetween.

### (Description of the structure of the screw pump)

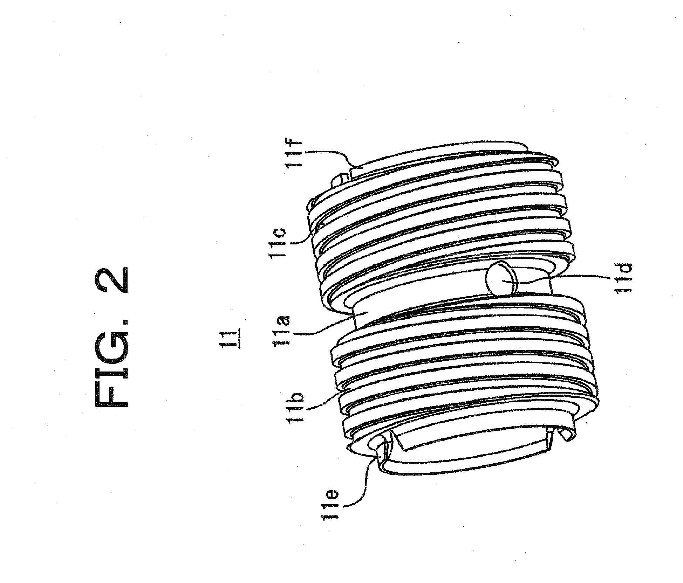

The lubricating device 10 for transmission 100 will be explained hereinafter with reference to FIGS. 1 and 2. The lubricating device 10 for transmission 100 includes a rotational member 11, a key 12 and O-rings 13. The rotational member 11 is in a cylindrical shape. A recessed groove 11 a is formed on the outer peripheral surface of the rotational member 11 in a circumferential direction at the central position in the axial direction thereof. The output oil passage 112a formed in the output shaft 112 communicated with the recessed groove 11 a, and wherein oil delivery grooves 11 b, 11c are formed by being recessed in a spiral shape on the outer peripheral surface of the rotational member 11 on the both sides of the recessed groove 11a. Thus, the lubricating device 10 for transmission 100 is a screw pump which delivers oil by rotating the rotational member 11 formed the oil delivery grooves 11 b, 11c in the outer peripheral surface thereof. The spiral directions (direction of forming, inclination angle) of the oil delivery groove 11 b and the oil delivery groove 11c are reverse direction for each other.

In the recessed groove 11a, a communication hole 11 d that penetrates from the bottom of the recessed groove 11a to the inner peripheral surface of the rotational member 11 is formed. On the both axial ends of the rotational member 11, small diameter portions 11e, 11 f are formed, a diameter of which is smaller than that of other portion thereof. On the inner peripheral surface of the rotational member 11, a key groove 11 g is formed. The output shaft 112 is inserted through the rotational member 11, and the rotational member 11 is mounted on the outer peripheral of the output shaft 112 between the first bearing 121 and the second bearing 122. In addition, the small diameter portions 11 e, 11 f formed on both ends of the rotational member 11 respectively contacts with the inner races of the first bearing 121 and the second bearing 122. It is noted that shims may be interposed between small diameter portions 11e, 11f and bearings 121,122. The key 12 is engaged with the key groove 11 g of the rotational member 11 and the key groove 112f of the output shaft 112, and therefore, the rotational member 11 is fixed to the output shaft 112, being restricted relative rotation therebetween.

In the axial direction (longitudinal direction), the communication hole 11 d of the rotational member 11 and the communication passages 112c of output shaft 112 coincide with each other. O-rings 13 that contact with the inner peripheral surface of the rotational member 11 are mounted on the outer peripheral surface of the output shaft 112 on the both sides of the communication passage 112c. By the O-rings 13, leakage of oil from the clearance between the rotational member 11 and the output shaft 112 is prevented.

The housing 101 is provided with a rotational member housing portion 101 a that has a cylindrical space. The rotational member 11 is accommodated in the rotational member housing portion 101 a. Thus, the outer peripheral of the rotational member 11 is covered by the housing 101. The outer circumferential surface of the rotational member 11 is fitted to the rotational member housing portion 101 a with a slight clearance (for example, 0.1 ∼ 0.3mm). Thus, in this embodiment, the casing of the lubricating device 10 for transmission 100 is constituted by using a housing 101 which rotatably supports the output shaft 112. In the housing 101, two oil supply passages 101b, 101c open to the cylindrical space of the rotational member housing portion 101 a are formed. The ends of oil supply passages 101b, 101c respectively, coincides with the axial ends opposite to the recessed groove 11a of oil delivery grooves 11 b, 11c. A leading ends of oil supply passages 101 b, 101 c are connected to an oil receiver (not shown) that receives the oil scraped up by rotation of gears of the transmission 100.

### (Description of the operation of screw pump)

When the output shaft 112 is rotated, with the rotation of the output shaft 112, the rotational member 11 is rotated. Then, the oil supplied through the oil supply passages 101b, 101c is delivered to the recessed groove 11 a by oil delivery grooves 11b.11c which are rotated. The oil delivered to the recessed groove 11 a flows into the oil supply hole 111b through the communication hole 11 d, the communication passage 112c, the output shaft oil passage 112a, the connecting member 131 and input shaft oil passage 111a. The oil that flows out of the oil supply hole 111b lubricates the bearing 161 that supports the drive gear 141, the engaging member 152 and the synchronizer ring 154.

### (Effect of the embodiment)

As apparent from the above description, the lubricating device 10 for transmission 100 of the present embodiment is fixed to the outer peripheral of the output shaft 112 between the bearings 121 and 122 that support the rotatable output shaft 112 of the transmission 100, and includes the cylindrical rotational member 11 that is provided with the oil delivery grooves 11 b, 11c. The oil delivery grooves 11 b, 11c are formed in the spiral shape on the outer peripheral surface of rotational member 11. Thus, when the lubricating device 10 is arranged to the transmission 100, as the rotational member 11 that delivers the oil is disposed between the first bearing 121 and the second bearing 122 for supporting the output shaft 112, the axial length of the transmission 100 does not become long, and it is possible to decrease the size of the transmission 100 in the axial direction. Also, as the lubricating device 10 for transmission 100 is a screw pump that delivers the oil by rotating the cylindrical rotational member 11 formed with oil delivery grooves 11 b, 11c on the outer peripheral surface thereof, regardless of the rotational speed of the output shaft 112 to which the cylindrical rotational member 11 is fixed, the oil can be delivered in a stable manner.

In addition, the outer peripheral surface of the cylindrical rotational member 11 is covered by the transmission housing 101 that rotatably supports the output shaft 112. That is, the transmission housing 101 is formed with the rotational member housing portion 101 a in which the cylindrical rotational member 11 is accommodated. Thus, as the transmission housing 101 is also used as the casing of the lubricating device 10 for transmission 100, it is possible to reduce the number of parts constituting the lubricating device 10 for transmission 100. Accordingly, it is possible to reduce the size, weight, and manufacturing cost of the automatic transmission.

Also, as the recessed grooves 11 a that communicates with the output shaft oil passage 112a formed inside of the output shaft 112 is formed on the outer peripheral surface of the rotational member 11 in a circumferential direction at the central position in the axial direction thereof. The oil delivery grooves 11 b, 11c are formed on the outer peripheral surface of the rotational member 11 on the both sides of the recessed grooves 11a. Then, with the rotation of the rotational member 11, the oil is delivered from oil delivery groove 11 b, 11c formed on the both sides of the recessed groove 11a to the recessed groove 11a. The spiral directions of the oil delivery grooves 11 b, 11c formed in a spiral shape on both sides of the recessed groove 11a are reverse direction for each other.Thus, when the rotational member 11 is rotated, the axial force acting on the rotational member 11 by the reaction of the delivery of the oil from the oil delivery groove 11 b and the axial force acting on the rotational member 11 by the reaction of the delivery of the oil from the oil delivery groove 11c are canceled, and accordingly the axial force does not act on the rotational member 11. Therefore, buckling of the end portion of the rotational member 11 is prevented.

Also, the output-side reduction gear 112d engaged with the reduction gear 113b that is formed on the counter shaft 113 rotatably connected to the input shaft 111 of the transmission 100 is formed closer to the input shaft 111 than the bearings 121 and 122. Thus, the transmission 100 of this embodiment is the output reduction type in which the rotational driving force from the motor is decelerated between the counter shaft 113 and the output shaft 112. Thus, there is no components of the transmission 100 between the first bearing 121 and the second bearing 122 that support the output shaft 112. Therefore, even if the rotational member 11 is disposed between the bearings 121 and 122 that support the output shaft 112, the axial length of the output shaft 112 does not become long. Therefore the axial dimension of the transmission 100 is not increased, and the axial dimension of the transmission 100 can be miniaturized.

### (Another embodiment)

In the embodiment described above, the rotational member 11 is provided on the outer periphery of the output shaft 112. However, it is permissible that the rotational member 11 is provided on the outer peripheral of the rotatable shaft such as the input shaft 111 and counter shaft 113 of the transmission 100.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

A lubricating device for transmission includes a rotational shaft (112) provided in a transmission housing (101), bearings (121,122) attached to the transmission housing (101) for supporting the rotational shaft (112), a cylindrical rotational member (11) fixed to the rotational shaft (112) between the bearings (121,122) at an outer peripheral of said rotational shaft (112), at least one oil delivery groove (11b.11c) which is spirally formed on an outer peripheral surface of the cylindrical rotational member (11), the outer peripheral surface of the cylindrical rotational member (11) being covered by a rotational member housing portion (101a) of the transmission housing (101).

## Claims

1. A lubricating device for transmission comprising;
a rotational shaft (112) provided in a transmission housing (101);
bearings (121,122) attached to the transmission housing (101) for supporting the rotational shaft (112);
a cylindrical rotational member (11) fixed to the rotational shaft (112) between the bearings (121,122) at an outer peripheral of said rotational shaft (112);
at least one oil delivery groove (11b.11c) which is spirally formed on an outer peripheral surface of the cylindrical rotational member (11), the outer peripheral surface of the cylindrical rotational member (11) being covered by a rotational member housing portion (101 a) of the transmission housing (101).

2. The lubricating device for transmission according to claim 1, wherein the rotational member housing portion (101 a) accommodates and rotatably fit to the rotational member (11).

3. The lubricating device for transmission according to claim 1, further comprising;
a recessed groove (11 a) formed on the outer peripheral surface of the rotational member (11) in a circumferential direction at the central position in the axial direction thereof;
an oil passage (112a) formed in the rotational shaft (112) communicated with the recessed groove (11a); and wherein
the respective oil delivery groove (11b,11c) is formed on the outer peripheral surface on the both sides of the recessed groove (11 a) and the spiral directions of the respective oil delivery grooves (11b,11c) are reverse direction for each other to deliver the oil to the recessed groove (11a) from the oil delivery grooves (11 b, 11 c) according to the rotation of the rotational member (11).

4. The lubricating device for transmission according to claim 1, wherein
the rotational shaft (112) is an output shaft (112) of the transmission (100); and
the output shaft (112) is provided with an output-side reduction gear (112d) that meshes with a reduction gear (113b) formed on a countershaft (113) rotatably connected with an input shaft (111) of the transmission (100), the output-side reduction gear (112d) being located closer to the input shaft (111) than the bearings (121,122).
